# EUROPÄISCHE PATENTSCHRIFT

(11) **EP 4 065 464 B1**
(45) Veröffentlichungstag und Bekanntmachung des Hinweises auf die Patenterteilung: **27.05.2026**
(21) Anmeldenummer: 20816437.6
(22) Anmeldetag: 27.11.2020
(51) Int. Cl.: B64C 1/00, B64C 3/00, B64F 5/10, F15D 1/00, B64C 21/10

(54) **VORRICHTUNG FÜR DAS ANBRINGEN VON AERODYNAMISCH FUNKTIONALEN FOLIEN UND DEREN VERWENDUNG**
APPARATUS FOR ATTACHING AERODYNAMICALLY FUNCTIONAL FILMS AND USE THEREOF
DISPOSITIF PERMETTANT L'APPLICATION DE FEUILLES À FONCTION AÉRODYNAMIQUE ET SON UTILISATION

(30) Priorität: 28.11.2019 DE 102019132344
(43) Veröffentlichungstag der Anmeldung: 05.10.2022
(73) Patentinhaber: Lufthansa Technik AG, 22335 Hamburg (DE)
(72) Erfinder: OESER, Oliver, 25494 Borstel-Hohenraden (DE); TROTTNOW, Dirk, 21493 Sahms (DE); FLANSCHGER, Andreas, 8010 Graz (AT); PFINGSTEN, Kai-christoph, 20251 Hamburg (DE)
(74) Vertreter: Glawe, Delfs, Moll
(86) Internationale Anmeldenummer: PCT/EP2020/083563
(87) Internationale Veröffentlichungsnummer: WO 2021/105315

(56) Entgegenhaltungen:
- DE-A1- 102013 102 164
- US-A1- 2010 187 361
- US-A1- 2019 202 547
- ORAFOL: "Verarbeitungsrichtlinien ORAFOL Folien für Luftfahrtanwendungen", 7 June 2016 (2016-06-07), Oranienburg, XP055775837, Retrieved from the Internet <URL:https://www.orafol.com/products/europe/de/application-instructions/VH14-aircraft-eu-application-de.pdf> [retrieved on 20210215]

## Beschreibung

Die Erfindung betrifft eine Vorrichtung für das Anbringen von aerodynamisch funktionalen Folien auf Oberflächen von umströmten Körpern sowie die Verwendung einer solchen Vorrichtung.

Aerodynamisch funktionale Folien sind in unterschiedlichen Ausprägungen und Anwendungsbereichen aus dem Stand der Technik bekannt, und dienen regelmäßig dazu, die Wandschubspannung auf Oberflächen von umströmten Körpern zu reduzieren. Die aerodynamisch funktionalen Folien weisen dazu in der Regel eine mikrostrukturierte Oberfläche auf.

Eine verbreitete Mikrostruktur ist die sog. Riblet-Struktur, mit sehr kleinen, im Wesentlichen entlang der Hauptströmungsrichtung verlaufenden Rippen. So finden sich Riblet-Strukturen bspw. auf Außenflächen von Flugzeugen, aber auch auf Rotorblättern von Windenergieanlagen, an der Außenhaut von Schiffen oder auf Außenflächen von Hochgeschwindigkeitszügen. Ebenfalls Verwendung finden solche Strukturen beispielsweise an Innenflächen von Pipelines.

Damit durch aerodynamisch funktionale Folien und insbesondere Riblet-Strukturen möglichst weitgehende Reduktion der Wandschubspannung erreicht werden kann, ist es erforderlich, dass die Folie möglichst exakt zur lokalen Hauptströmungsrichtung - also derjenigen Richtung, in der die Überströmung der Oberfläche im Bereich der Folie hauptsächlich zu erwarten ist - ausgerichtet ist. Bei einem Flugzeug ergibt sich die - lokal über die gesamte Außenwand eines Flugzeuges durchaus variierende - Hauptströmungsrichtung über die Außenwand bspw. aus der Umströmung des Flugzeugs im Reiseflug.

Im Stand der Technik werden aerodynamisch funktionale Folien in Form von in der Regel rechteckigen oder quadratischen Patches in Standardformaten direkt auf einen umströmten Körper aufgeklebt. Dabei müssen sie manuell am Körper positioniert und ggf. durch Zuschnitt noch konfektioniert werden. Um eine möglichst genaue Positionierung zu erreichen, ist eine aufwendige und insbesondere langwierige Einmessung erforderlich. Bei Fahrzeugen wie Flugzeugen oder Hochgeschwindigkeitszügen bedeutet dies eine unerwünschte lange Standzeit zur Anbringung von aerodynamisch funktionalen Folien.

Das Dokument DE 10 2013 102 164 A1 betrifft ein Verfahren zur Beschichtung der Außenhaut eines Flugzeuges mit schrumpffähigen versehenen Folienmaterial offenbart, dessen Haftschicht bei den für die Schrumpfung auf das letztendlich gewünschte Maß erforderliche Temperatur ins Fließen kommt.

Aufgabe der vorliegenden Erfindung ist es, das Anbringen von aerodynamisch funktionalen Folien auf Oberflächen von umströmten Körpern so zu verbessern, dass die im Stand der Technik bekannten Nachteile nicht mehr oder nur noch in vermindertem Umfang auftreten.

Gelöst wird diese Aufgabe durch eine Vorrichtung gemäß Anspruch 1, sowie eine Verwendung der Vorrichtung gemäß dem unabhängigen Anspruch 4. Vorteilhafte Weiterbildungen sind Gegenstand der abhängigen Ansprüche. Die Erfindung wird durch die Ansprüche definiert. Aspekte dieser Beschreibung, die nicht unter die Ansprüche fallen, dienen nur der Erläuterung und sind nicht Teil der Erfindung.

Demnach betrifft die Erfindung eine Vorrichtung für das Anbringen von aerodynamisch funktionalen Folien auf Oberflächen von umströmten Körpern umfassend eine selbsthaftende wiederablösbare Positionierfolie mit Positionierhilfen zur exakten Positionierung der Positionierfolie auf der Oberfläche des umströmten Körpers und wenigstens einer Applikationsfläche für die aufzubringende aerodynamisch funktionale Folie, wobei im Bereich der wenigstens einen Applikationsfläche auf der mit Klebstoff versehenen Seite der Positionierfolie wenigstens eine selbsthaftende aerodynamisch funktionale Folie vorgesehen ist, die beim Anbringen der Positionierfolie auf derselben Oberfläche des umströmten Körpers anhaftet, sodass sowohl zwischen Positionierfolie und Oberfläche abseits der wenigstens einen Applikationsfläche als auch zwischen der wenigstens einen aerodynamisch funktionalen Folie und der Oberfläche im Bereich der wenigstens einen Applikationsfläche jeweils eine haftende Verbindung besteht, und bei dem anschließenden Entfernen der Positionierfolie auf der Oberfläche des umströmten Körpers verbleibt.

Die Erfindung betrifft weiterhin die Verwendung einer erfindungsgemäßen Positionierhilfe zur Anbringung von aerodynamisch funktionalen Folien auf Oberflächen von umströmten Körpern mit den Schritten:
a) Aufbringen der Positionierfolie der Vorrichtung in der durch die Positionierhilfen vorgegebenen Position auf die Oberfläche des umströmten Körpers, wobei im Bereich der wenigstens einen Applikationsfläche auf der mit Klebstoff versehenen Seite der Positionierfolie wenigstens eine selbsthaftende aerodynamisch funktionale Folie derart vorgesehen ist, dass diese zeitgleich mit der Positionierfolie auf dieselbe Oberfläche des umströmten Körpers in den Applikationsflächen der Positionierfolie aufgebracht wird, sodass sowohl zwischen Positionierfolie und Oberfläche abseits der wenigstens einen Applikationsfläche als auch zwischen der wenigstens einen aerodynamisch funktionalen Folie und der Oberfläche im Bereich der wenigstens einen Applikationsfläche jeweils eine haftende Verbindung besteht; und
b) Entfernen der Positionierfolie.

Eine Folie ist "selbsthaftend" im Sinne der vorliegenden Erfindung, wenn sie nach Aufbringung auf einer Oberfläche in ihrer Lage und Position grundsätzlich festgelegt ist. Dabei ist nicht ausgeschlossen, dass eine selbsthaftende Folie bei Bedarf auch wieder, vorzugsweise zerstörungsfrei von der Oberfläche abgelöst werden kann. Eine selbsthaftende Folie kann bspw. selbstklebend, zur Herstellung einer statisch haftenden Verbindung mit der Oberfläche ausgebildet oder magnetisch sein. Die selbsthaftende Verbindung der Folie mit der Oberfläche kann vollflächig oder punktuell erfolgen.

Die Erfindung hat erkannt, dass das Anbringen von aerodynamisch funktionalen Folien auf Oberflächen in der korrekten Position und Ausrichtung durch die Verwendung einer Vorrichtung in Form eine Positionierfolie deutlich vereinfacht und beschleunigt werden kann, ohne dass dabei die Genauigkeit der Positionierung der aerodynamisch funktionalen Folie(n) reduziert werden würde. Die Positionierfolie ist als wiederablösbare selbsthaftende Folie, bspw. Klebefolie, ausgestaltet, die zeitweise für die Positionierung der aerodynamisch funktionalen Folie(n) auf der Oberfläche eines Körpers auf derselben Oberfläche angebracht, nach dem erfolgten Aufbringen der aerodynamisch funktionalen Folie(n) aber auch wieder entfernt wird.

Die Positionierfolie weist dabei Positionierhilfen auf, die eine exakte Positionierung der Positionierfolie auf der Oberfläche des umströmten Körpers gestatten. Bei den Positionierhilfen kann es sich um Kanten der Positionierfolie handeln, die an Vorsprüngen oder Ähnlichem auf der Oberfläche des umströmten Körpers in Anlage oder zumindest in Deckung gebracht werden. Alternativ oder zusätzlich ist es auch möglich, auf der Positionierfolie Markierungen vorzusehen, die mit bestimmten vorgegebenen Merkmalen, wie bspw. Schrauben, Bohrungen oder Fugen, auf der Oberfläche des umströmten Körpers in Deckung zu bringen sind. Wird die Positionierfolie entsprechend den Positionierhilfen auf die Oberfläche des umströmten Körpers aufgebracht, ist eine korrekte Positionierung der Positionierfolie gewährleistet.

Mit der korrekten Positionierung der Positionierfolie ist auch gewährleistet, dass die wenigstens eine Applikationsfläche der Positionierfolie korrekt auf der Oberfläche des umströmten Körpers positioniert ist. Die Applikationsfläche ist dabei diejenige Fläche, in der die aerodynamisch funktionalen Folien auf der Oberfläche des umströmten Körpers aufzubringen ist bzw. aufgebracht wird.

In der erfindungsgemäßen Ausgestaltung ist im Bereich der wenigstens einen Applikationsfläche auf der selbsthaftenden, mit Klebstoff versehenen Seite der Positionierfolie wenigstens eine selbstklebende aerodynamisch funktionale Folie vorgesehen, die beim Anbringen der Positionierfolie auf der Oberfläche des umströmten Körpers anhaftet und bei dem anschließenden Entfernen der Positionierfolie auf der Oberfläche des umströmten Körpers verbleibt. In anderen Worten bilden die aerodynamisch funktionale Folie und die Positionierfolie im Ausgangszustand eine mehrlagige Einheit, die dergestalt ist, dass bei Aufbringen der Positionierfolie in der mithilfe der Positionierhilfen sichergestellten korrekten Position die aerodynamisch funktionale Folie unmittelbar mit auf die Oberfläche aufgeklebt wird. Die Position der aerodynamisch funktionalen Folie auf der Oberfläche kann dabei unmittelbar durch die Lage der Folie auf der Positionierfolie bestimmt werden. Es ist selbstverständlich auch möglich, mehr als eine Applikationsfläche und/oder aerodynamisch funktionale Folie auf der Positionierfolie vorzusehen, um so mehrere Bereiche der Oberfläche des umströmten Körpers mit einer aerodynamisch funktionalen Folie zu versehen.

Ist die Positionierfolie zusammen mit der oder den aerodynamisch funktionale(n) Folie(n) in der oder den Applikationsfläche(n) auf der Oberfläche des umströmten Körpers aufgebracht, besteht sowohl zwischen Positionierfolie und Oberfläche - nämlich abseits der Applikationsflächen - als auch zwischen der oder den aerodynamisch funktionale(n) Folie(n) und der Oberfläche - im Bereich der Applikationsflächen - jeweils eine haftende Verbindung, wobei insbesondere diejenige zwischen Positionierfolie und Oberfläche wiederablösbar ausgestaltet ist. Die Verbindung zwischen der oder den aerodynamisch funktionale(n) Folie(n) und der Oberfläche ist hingegen regelmäßig nicht zum einfachen Ablösen ausgestaltet. Ist die stoffschlüssige Verbindung zwischen aerodynamisch funktionalen Folie(n) und Oberfläche des umströmten Körpers nicht wieder ablösbar oder weist zumindest eine deutlich höhere Haftung auf, lässt sich die Positionierfolie von der Oberfläche abziehen, wobei dann die aerodynamisch funktionale(n) Folie(n) in der gewünschten Position auf der Oberfläche des umströmten Körpers verbleiben.

Es ist bevorzugt, wenn bei einer erforderlichen Ausrichtung der aerodynamisch funktionalen Folie auf der Oberfläche des umströmten Körpers - bspw. weil es sich um eine entlang der Hauptströmungsrichtung auszurichtende Riblet-Folie handelt - die aerodynamisch funktionale Folie derart an der Positionierfolie angeordnet ist, dass die aerodynamisch funktionale Folie nach Anbringen und anschließendem Entfernen der Positionierfolie die gewünschte Ausrichtung der aerodynamisch funktionalen Folie erreicht wird.

In der oder wenigstens einer der aerodynamisch funktionalen Folie können Ausnehmungen und/oder Schlitze als Ausschnitte für an der Oberfläche des umströmten Körpers freizubleibende Stellen vorgesehen sein. Wird die aerodynamisch funktionale Folie bspw. im Bereich einer Klappe an der Oberfläche des umströmten Körpers angeordnet, kann durch geeignete Schlitze in der aerodynamisch funktionalen Folie die Funktionsfähigkeit der Klappe gewährleistet bleiben. Auch können andere Öffnungen oder Sensoren an der Oberfläche des umströmten Körpers durch geeignete Ausnehmungen in der aerodynamisch funktionalen Folie freigehalten werden.

In einer nicht unter die Ansprüche fallenden Ausgestaltung ist im Bereich wenigstens einer Applikationsfläche ein Applikationsfenster vorgesehen, innerhalb dessen nach Anbringen der wiederablösbaren Klebefolie wenigstens eine aerodynamisch funktionale Folie auf die Oberfläche des umströmten Körpers aufbringbar ist. Bei einem Applikationsfenster handelt es sich um eine Ausnehmung in der Positionierfolie, die nach erfolgter Anbringung der Positionierfolie auf der Oberfläche eines umströmten Körpers die Position der in einem weiteren Schritt aufzubringenden aerodynamisch funktionalen Folie angibt und in die unmittelbar die aerodynamisch funktionale Folie aufgebracht werden kann. Ist die aerodynamisch funktionale Folie innerhalb des oder der Applikationsfenster vollständig aufgebracht, kann die Positionierfolie wieder entfernt werden.

Es ist bevorzugt, die Positionierfolie im Bereich der Applikationsfester Ausrichthilfen für die Ausrichtung der aufzubringenden aerodynamisch funktionalen Folie aufweist. Bei den Ausrichthilfen kann es sich bspw. um Markierungen auf der Positionierfolie handeln, die angeben, wie die aufzubringenden aerodynamisch funktionalen Folie ausgerichtet sein muss, bspw. weil es sich um eine entlang der lokalen Hauptströmungsrichtung auszurichtende Riblet-Folie handelt.

Alternativ oder zusätzlich kann der Umriss des wenigstens einen Applikationsfenster an die Form der innerhalb wenigstens eines Applikationsfensters anzubringenden aerodynamisch funktionalen Folie angepasst sein, wobei der Umriss des wenigstens einen Applikationsfenster vorzugsweise unsymmetrisch ist. In anderen Worten entspricht das Applikationsfenster in seinem Umriss also vorzugsweise dem Umriss der aufzubringenden Folie, sodass diese nur in wenigen möglichen Ausrichtungen durch das Applikationsfenster auf die Oberfläche des umströmten Körpers aufgebracht werden kann, wodurch das Risiko einer Fehlausrichtung der aerodynamisch funktionalen Folie reduziert werden kann. Dies kann grundsätzlich auch dann gelten, wenn mehrere Folienabschnitte durch das Applikationsfenster aufgebracht werden, um zusammen die gewünschte aerodynamisch wirksame Fläche auf der Oberfläche des umströmten Körpers zu bilden, sofern die den Umriss die Fläche bildenden Folienabschnitte jeweils nur in wenigen Positionen innerhalb eines Applikationsfensters positionierbar sind.

Das Risiko einer Fehlausrichtung der aerodynamisch funktionalen Folie kann nahezu vollständig ausgeschlossen werden, wenn der Umriss des Applikationsfensters und damit vorzugsweise auch der Umriss der durch dieses Applikationsfenster aufzubringenden Folie unsymmetrisch ausgestaltet ist. In diesem Fall lässt sich die Folie regelmäßig nur in einer einzigen Ausrichtung durch das Applikationsfenster aufbringen. Auch dies gilt wieder grundsätzlich auch dann, wenn mehrere Folienabschnitte durch das Applikationsfenster aufgebracht werden, um zusammen die gewünschte aerodynamisch wirksame Fläche auf der Oberfläche des umströmten Körpers zu bilden.

Es ist auch möglich, anstelle einer unmittelbar in ihrem Umriss an den Rand des Applikationsfensters angepasste aerodynamisch funktionale Folie eine zweite Positionierungsfolie zu verwenden, die gemäß der erfindungsgemäßen Ausgestaltung ausgebildet ist. Die Positionierhilfen der zweiten Positionierungsfolie, an der die letztendliche aerodynamisch funktionale Folie angeordnet ist, können dann auf den Rand des Applikationsfensters der (ersten) Positionierfolie angepasst sein.

Die erfindungsgemäße Positionierfolie kann zusätzlich oder alternativ auch zur Positionierung von sogenannten Schneidbändern - auch Knifeless-Tapes genannt - genutzt werden.

Entsprechende Schneidbänder werden regelmäßig vor der aerodynamisch funktionalen Folie auf die Oberfläche des umströmten Körpers aufgebracht. Nach Aufbringen der aerodynamisch funktionalen Folie wird das Schneidband abgezogen, so dass die aerodynamisch funktionale Folie entlang des Schneidbandes zurechtgeschnitten wird. Mit den sogenannten Schneidbändern lassen sich so auch an unterbrochenen Oberflächen, bspw. durch Zugangsöffnungen an einem Flugzeugrumpf, aerodynamisch funktionalen Folien auf einfache Weise anpassen.

Zur exakten Positionierung von Schneidbändern können diese mit Hilfe einer erfindungsgemäßen Positionierfolie auf die Oberfläche des umströmten Körpers aufgebracht werden.

Vorzugsweise wird dabei wenigstens ein Schneidband am Rand der Applikationsfläche auf die Oberfläche des umströmten Körpers aufgebracht. Nachdem die Positionierfolie abgezogen wurde, verbleibt das Schneidband auf der Oberfläche des umströmten Körpers. Es kann dann die aerodynamisch funktionale Folie aufgebracht werden. Anschließend wird durch Abziehen des Schneidbandes die aerodynamisch funktionale Folie dort geschnitten, wo sie das Schneidband überragt.

Zur Erläuterung der erfindungsgemäßen Verwendung wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: schematische Draufsicht eines Flugzeugflügels, der in vorgegebenen Bereichen mit aerodynamisch funktionale Folie versehen werden soll;
- Figur 2:: Kit umfassend eine Vorrichtung für das Anbringen von aerodynamisch funktionaler Folie auf den Flugzeugflügel gemäß Figur 1;
- Figur 3a-c:: schematische Darstellung der Verwendung des Kits gemäß Figur 2 zum Anbringen von aerodynamisch funktionaler Folie auf den Flugzeugflügel gemäß Figur 1; und
- Figur 4a-b:: schematische Detaildarstellung einer Variante des Anbringens aerodynamisch funktionaler Folie mit der Vorrichtung aus Figur 2.

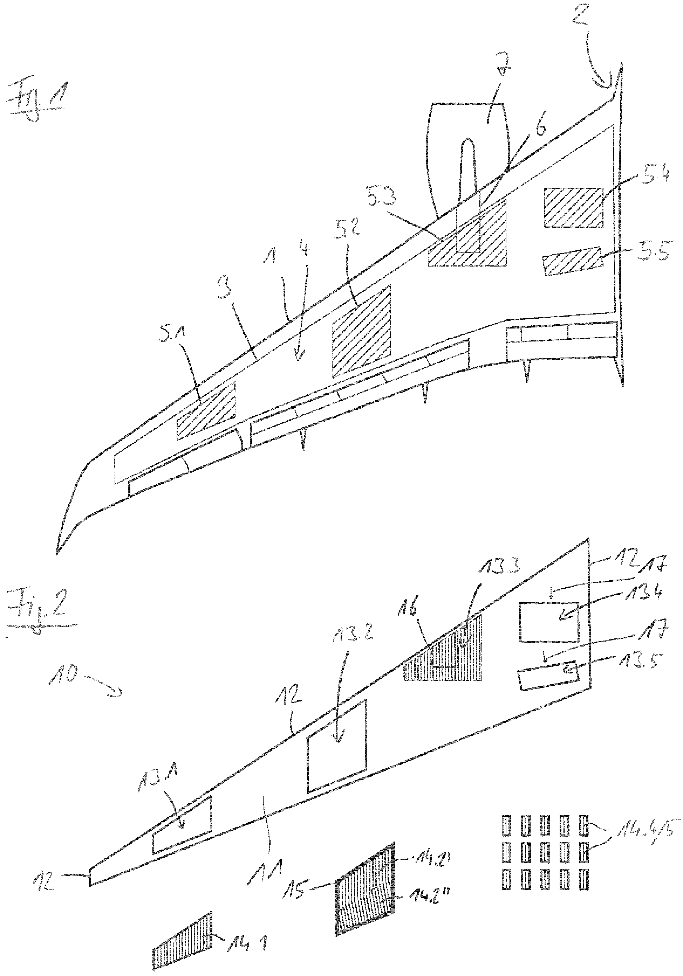

In Figur 1 ist schematisch der Flügel 1 eines Verkehrsflugzeuges 2 als umströmter Körper in Draufsicht dargestellt. Auf dem Flügel 2 ist eine Markierung 3 vorgesehen, die diejenige Fläche 4 des Flügels 2 kennzeichnet, die betreten werden darf. In eben dieser Trittfläche 4 sind Bereiche 5.1-5.5 vorgesehen, die mit aerodynamisch funktionaler Folie, nämlich einer Riblet-Folie, zu versehen sind. In den Bereich 5.3 erstreckt sich eine Klappe 6, die, wenn geöffnet, Zugang zur Aufhängung des Triebwerks 7 gestattet. Die Funktion der Klappe 6 darf durch die in dem fraglichen Bereich 5.3 anzubringende aerodynamisch funktionale Folie nicht beeinträchtigt werden.

In Figur 2 ist ein Kit 10 dargestellt, mit dem die aerodynamisch funktionale Folie in den gewünschten Bereichen 5.1-5.5 an dem Flügel 2 schnell und positionsgenau angebracht werden kann.

Das Kit 10 umfasst eine Positionierfolie 11, deren Oberseite dargestellt ist und die auf der Unterseite derart selbstklebend ausgebildet ist, dass sich die Positionsfolie 11 rückstandsfrei von einer Oberfläche, auf der sie angebracht ist, auch wieder abgelöst werden kann. Die Positionierfolie 11 ist im dargestellten Ausführungsbeispiel selbstklebend, kann grundsätzlich aber auch statisch oder magnetisch selbsthaftend ausgestaltet sein. Die nachfolgenden, auf die selbstklebende Eigenschaft der Positionierfolie 11 abstellenden Ausführungen gelten dann analog.

Die Positionierfolie 11 weist als Positionierhilfen 12 drei Kanten auf, die im Verwendungszustand mit der Markierung 3 der Trittfläche 4 des Flügeltyps, für den die dargestellte Positionierfolie 11 vorgesehen und wie er in Figur 1 dargestellt ist, in Deckung gebracht werden können, wodurch die korrekte Ausrichtung der Positionierfolie 11 sichergestellt wird.

Darüber hinaus weist die Positionierfolie 11 noch eine, den aerodynamisch funktionalen Folie zu versehenden Bereichen 5.1-5.5 des Flügels 1 entsprechende Anzahl an Applikationsflächen 13.1-13.5 auf. Die Applikationsflächen 13.1-13.5 sind in ihrer Form jeweils an die Bereiche 5.1-5.5, mit denen sie bei ordnungsgemäßer Anbringung der Positionierfolie 11 auf dem Flügel 1 zusammenfallen, angepasst.

Die Applikationsfläche 13.1 ist als Applikationsfenster, d. h. als Ausnehmung in der Positionierfolie 11 ausgebildet, die einen unsymmetrischen Umriss aufweist. Für die Applikationsfläche 13.1 ist eine aerodynamisch funktionale Folie 14.1 vorgesehen, die sich lediglich in einer vorgegebenen Position innerhalb des Applikationsfensters auf den Flügel 1 aufbringen lässt. Damit ist durch das Applikationsfenster auch unmittelbar die Ausrichtung der aerodynamisch funktionalen Folie 14.1 auf dem Flügel 1 vorgegeben, weshalb die Folie 14.1 eine Riblet-Struktur entsprechend der zu erwartenden Hauptströmungsrichtung in dem Bereich 5.1 aufweist.

Auch die Applikationsfläche 13.2 ist als Applikationsfenster, also als Ausnehmung in der Positionierfolie 11 ausgebildet. Aufgrund der Größe der Applikationsfläche 13.2 kann die Hauptströmungsrichtung jedoch nicht mehr als konstant über die Fläche angesehen werden. Um dem Rechnung zu tragen, sind zwei aerodynamisch funktionalen Folie 14.2', 14.2'' vorgesehen, die zusammen den Bereich 5.2 vollständig abdecken, jedoch unterschiedliche Ausrichtungen ihrer Riblet-Struktur aufweisen. Um dennoch ein gemeinsames Aufbringen der beiden Folie 14.2', 14.2" zu ermöglichen, ist eine zweite Positionierungsfolie 15 vorgesehen, auf deren selbstklebender Unterseite die beiden Folie 14.2', 14.2" in der korrekten Ausrichtung zueinander angeordnet ist. Die Klebeschicht der Folien 14.2', 14.2'' ist auf der von der Positionierungsfolie 15 abgewandten Seite vorgesehen. Das Aufbringen der beiden aerodynamisch funktionalen Folien 14.2', 14.2'' mithilfe der zweiten Positionierfolie 15 wird später noch näher erläutert.

In der Applikationsfläche 13.3 ist die Positionierfolie 11 durchgehend und weist keine Ausnehmung auf. Dafür ist auf der Unterseite der Positionierfolie 11 unmittelbar die aerodynamisch funktionale Folie 14.3 angeordnet, deren Klebeschicht auf der von der Positionierfolie 11 abgewandten Seite angeordnet ist. Die aerodynamisch funktionale Folie 14.3 weist Schlitze 16 auf, die der Umrandung der Klappe 6 auf dem Flügel 4 entsprechen, sodass die Klappe 6 auch nach Anbringen der aerodynamisch funktionalen Folie 14.3 im Bereich 5.3 noch geöffnet werden kann. Das Anbringen der Folie 14.3 auf den Flügel 1 wird später noch näher beschrieben.

Die Applikationsflächen 13.4 und 13.5 sind rechteckige Applikationsfenster in der Positionierfolie 11, die mit den jeweiligen Bereichen 5.4 und 5.5 übereinstimmen. Für die Applikationsflächen 13.4 und 13.5 sind eine Vielzahl kleinerer Abschnitte aerodynamisch funktionaler Folie 14.4/5 in einer Standardgröße vorgesehen, mit denen die Bereiche 5.4 und 5.5 kachelartig zu versehen ist. Um sicherzustellen, dass die Abschnitte aerodynamisch funktionaler Folie 14.4/5 in der korrekten Orientierung in den Bereichen 5.4 und 5.5 auf den Flügel 1 aufgebracht werden, sind auf der Positionierfolie 11 Ausrichthilfen 17 vorgesehen, anhand derer die aufzubringende aerodynamisch funktionale Folie 14.4/5 ausgerichtet werden kann.

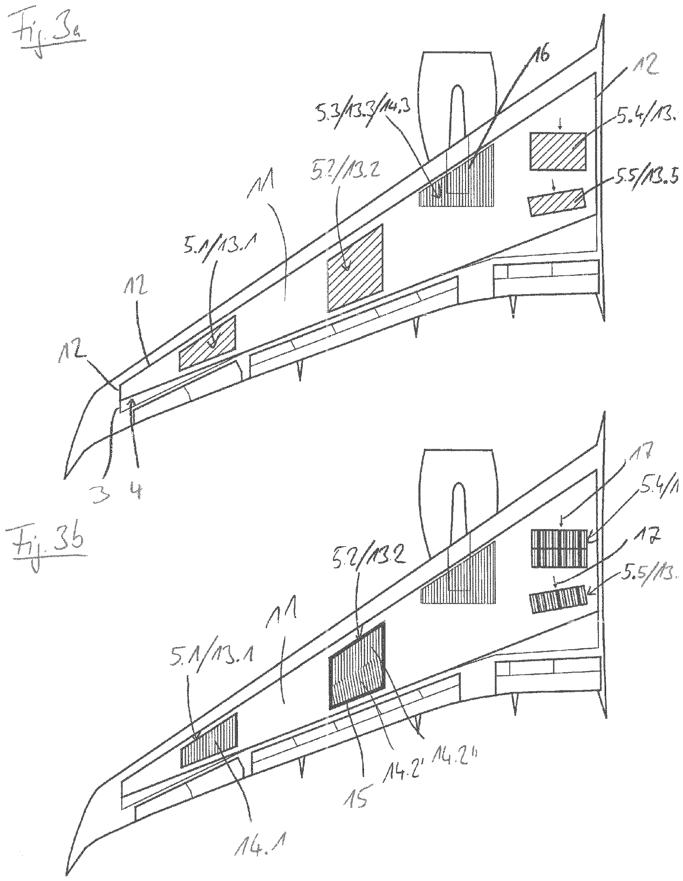

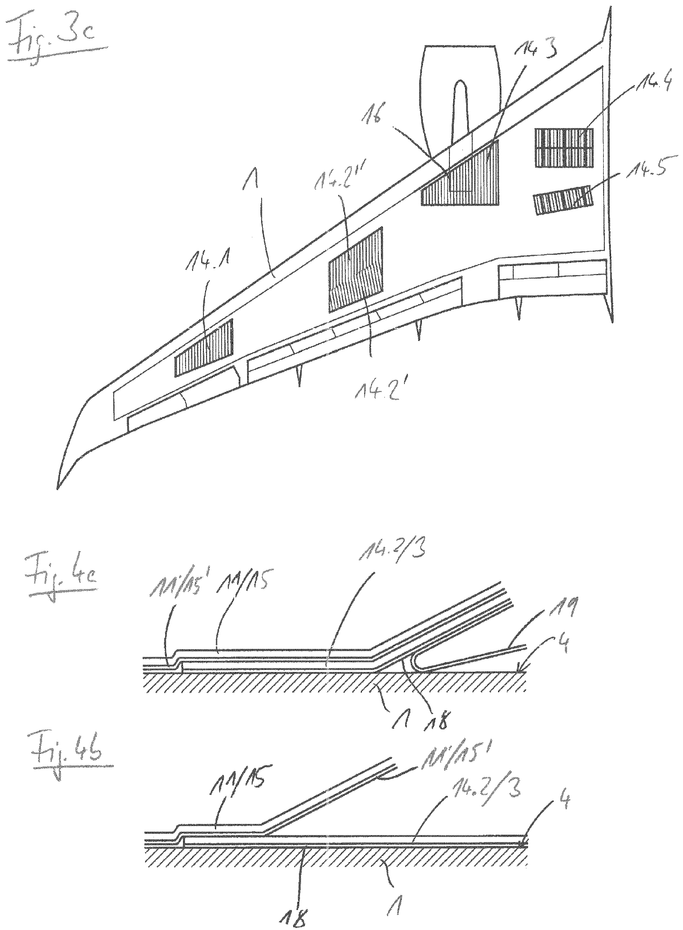

Anhand der Figuren 3a-c wird nun die Verwendung der Vorrichtung 10 gemäß Figur 2 zur Anbringung aerodynamisch funktionaler Folie 14.1-5 in den dafür vorgesehenen Bereichen 5.1-5 auf dem Flügel 1 des Flugzeugs 2 gemäß Figur 1 erläutert.

In einem ersten, in Figur 3a dargestellten Schritt wird die Positionierfolie 11 auf dem Flügel 1 aufgeklebt, wobei darauf geachtet wird, dass die dafür vorgesehenen Kanten 12 der Positionierfolie 11 genau mit der Markierung 3 der Fläche 4 auf dem Flügel 1 zusammenfällt. Ist die Positionierfolie 11 entsprechend genau auf dem Flügel 1 aufgebracht, fallen die Applikationsflächen 13.1-5 mit den jeweiligen, zur Anbringung aerodynamisch funktionaler Folien 14.1-5 vorgesehenen Bereichen 5.1-5 zusammen. Im Bereich 5.3 wird beim Anbringen der Positionierfolie 11 sogar bereits die dafür vorgesehene Folie 14.3 unmittelbar und in der korrekten Position und Orientierung auf den Flügel 1 aufgebracht bzw. aufgeklebt. Der Schlitz 16 in der Folie 14.3 fällt dabei mit den Rändern der Klappe 6 zusammen.

In den übrigen Bereichen 5.1, 5.2, 5.4 und 5.5 werden in dem darauffolgenden Schritt (vgl. Figur 3b) die jeweiligen Folien 14.1, 14.2, 14.4/5 aufgebracht.

Im Bereich 5.1 wird die Folie 14.1 in der aufgrund des unsymmetrischen Zuschnitts einzig möglichen Orientierung innerhalb der Applikationsflächen 13.1 aufgeklebt. Vergleichbares gilt auch für die Folien 14.2' und 14.2'', die an der zweiten Positionierfolie 15 befestigt sind. Indem die zweite Positionierfolie 15 in einer durch etwaige Positionierhilfen angezeigten Position und Ausrichtung gegenüber der Applikationsfläche 13.2 auf den Flügel 1 aufgebracht wird, ergibt sich unmittelbar die korrekte Positionierung der Folien 14.2' und 14.2".

In den Bereichen 5.4 und 5.5 werden nacheinander die einzelnen Folienabschnitte 14.4/5 aufgeklebt, sodass sich letztendliche eine durchgehende Fläche aerodynamisch funktionaler Folie 14 ergibt, welche die gesamten Bereiche 5.4 und 5.5 ausfüllen. Bei dem Anbringen der Folienabschnitte 14.4/5 ist darauf zu achten, dass diese gemäß der Ausrichthilfe 17 ausgerichtet werden.

Abschließend werden die Positionierfolien 11, 15 entfernt, wobei die aerodynamisch funktionalen Folien 14.1-5 am Flügel 1 verbleiben.

Es ist selbstverständlich möglich, dass die aerodynamisch funktionalen Folien 14.1-5 nach dem letztendlichen Aufkleben auf den Flügel 1 und vor oder nach Entfernen der Positionierfolien 11, 15 noch nachbearbeitet werden, bspw. um die Funktionsfähigkeit von weiteren Klappen oder Sensoren (nicht dargestellt) zu gewährleisten.

In Figur 4a, b ist das Anbringen und Ablösen von Positionierfolie 11, 15 mit unmittelbar daran angeordneter aerodynamisch funktionaler Folie 14.2/3 dargestellt.

Wie in Figur 4a dargestellt, wird die Positionierfolie 11/15 ihrer zum Wiederablösen ausgebildeten Klebeschicht 11'/15' auf eine Fläche 4 des Flügels 1 aufgeklebt, wobei in Abschnitten, die letztendlich Applikationsflächen 13.3 bilden, eine aerodynamisch funktionale Folie 14.2/3 unmittelbar an der Positionierfolie 11/15 vorgesehen ist. Die aerodynamisch funktionale Folie 14.2/3 ist über die ansonsten zur Befestigung am Flügel 1 vorgesehene Klebeschicht 11'/15' lösbar mit der Positionierfolie 11/15 verbunden und weist ihrerseits eine Klebeschicht 18 auf, mit der die Folie 14.2/3 unlösbar mit dem Flügel 1 verbunden werden kann.

Das Anbringen der mehrlagigen Anordnung aus Positionierfolie 11/15 und aerodynamisch funktionaler Folie 14.2/3 erfolgt auf bekannte Weise, bspw. indem - wie in Figur 4a dargestellt - der nichtklebende Träger 19 nach und nach abgezogen wird und die Anordnung an den Flügel 1 angedrückt wird.

Ist die Positionierfolie 11/15 vollständig aufgebracht, kann sie anschließend wieder entfernt werden. Aufgrund der wiederablösbar ausgestalteten Klebeschicht 11'/15' lässt sich die Positionierfolie 11/15 rückstandsfrei entfernen, wobei die aerodynamisch funktionalen Folien 14.2/3 aufgrund der nicht-wiederablösbaren Klebeschicht 18 am Flügel 1 verbleiben.

## Patentansprüche

1. Vorrichtung für das Anbringen von aerodynamisch funktionalen Folien (14.1-5) auf Oberflächen (4) von umströmten Körpern (1) umfassend eine selbsthaftende wiederablösbare Positionierfolie (11) mit Positionierhilfen (12) zur exakten Positionierung der Positionierfolie (11) auf der Oberfläche (4) des umströmten Körpers (1) und wenigstens einer Applikationsfläche (13.1-5) für die aufzubringende aerodynamisch funktionale Folie (14.1-5),
wobei im Bereich der wenigstens einen Applikationsfläche (13.3) auf der mit Klebstoff (11') versehenen Seite der Positionierfolie (11) wenigstens eine selbsthaftende aerodynamisch funktionale Folie (14.3) vorgesehen ist, die beim Anbringen der Positionierfolie (11) auf derselben Oberfläche (4) des umströmten Körpers (1) anhaftet, sodass sowohl zwischen Positionierfolie (11) und Oberfläche (4) abseits der wenigstens einen Applikationsfläche (13.3) als auch zwischen der wenigstens einen aerodynamisch funktionalen Folie (14.3) und der Oberfläche (4) im Bereich der wenigstens einen Applikationsfläche (13.3) jeweils eine haftende Verbindung besteht, und bei dem anschließenden Entfernen der Positionierfolie (11) auf der Oberfläche (4) des umströmten Körpers (1) verbleibt.

2. Vorrichtung nach Anspruch 1,
wobei bei einer erforderlichen Ausrichtung der aerodynamisch funktionalen Folie (14.3) auf der Oberfläche (4) des umströmten Körpers (1) die aerodynamisch funktionale Folie (14.3) derart an der Positionierfolie (11) angeordnet ist, dass die aerodynamisch funktionale Folie (14.3) nach Anbringen und anschließendem Entfernen der Positionierfolie (11) die gewünschte Ausrichtung der aerodynamisch funktionalen Folie (14.3) erreicht wird.

3. Vorrichtung nach einem der vorhergehenden Ansprüche ,
wobei die aerodynamisch funktionale Folie (14.3) Ausnehmungen und/oder Schlitze (13) als Ausschnitte für an der Oberflächen (4) des umströmten Körpers (1) freizubleibende Stellen aufweist.

4. Verwendung einer Vorrichtung gemäß einem der vorhergehenden Ansprüche zur Anbringung von aerodynamisch funktionalen Folien (14.1-5) auf Oberflächen (4) von umströmten Körpern (1) mit den Schritten:
a) Aufbringen der Positionierfolie (11) der Vorrichtung in der durch die Positionierhilfen (12) vorgegebenen Position auf die Oberfläche (4) des umströmten Körpers (1), wobei im Bereich der wenigstens einen Applikationsfläche (13.3) auf der mit Klebstoff (11') versehenen Seite der Positionierfolie (11) wenigstens eine selbsthaftende aerodynamisch funktionale Folie (14.3) derart vorgesehen ist, dass diese zeitgleich mit der Positionierfolie (11) auf dieselbe Oberfläche (4) des umströmten Körpers (1) in den Applikationsflächen (13.1-5) der Positionierfolie (11) aufgebracht wird, sodass sowohl zwischen Positionierfolie (11) und Oberfläche (4) abseits der wenigstens einen Applikationsfläche (13.3) als auch zwischen der wenigstens einen aerodynamisch funktionalen Folie (14.3) und der Oberfläche (4) im Bereich der wenigstens einen Applikationsfläche (13.3) jeweils eine haftende Verbindung besteht; und
b) Entfernen der Positionierfolie (11).

5. Verwendung nach Anspruch 4,
wobei die aerodynamisch funktionale Folie (14.1-5) eine Riblet-Folie und/oder der umströmte Körper ein Flugzeug (2) oder ein Flugzeugflügel (1) ist.

## Claims

1. Apparatus for attaching aerodynamically functional films (14.1-5) to surfaces (4) of bodies (1) around which flow passes, comprising a self-adhesive, redetachable positioning film (11) having positioning aids (12) for the exact positioning of the positioning film (11) on the surface (4) of the body (1) around which flow passes and having at least one application area (13.1-5) for the aerodynamically functional film (14.1-5) that is to be applied, wherein
provided in the region of the at least one application area (13.3) on that side of the positioning film (11) that is provided with adhesive (11') is at least one self-adhesive, aerodynamically functional film (14.3) which, when the positioning film (11) is being attached, adheres to the same surface (4) of the body (1) around which flow passes, such that there is a respective adhesive connection both between the positioning film (11) and the surface (4) except for the at least one application area (13.3) and between the at least one aerodynamically functional film (14.3) and the surface (4) in the region of the at least one application area (13.3), and, when the positioning film (11) is subsequently removed, remains on the surface (4) of the body (1) around which flow passes.

2. Apparatus according to Claim 1, wherein,
when it is necessary to align the aerodynamically functional film (14.3) on the surface (4) of the body (1) around which flow passes, the aerodynamically functional film (14.3) is arranged on the positioning film (11) in such a way that the aerodynamically functional film (14.3) the desired alignment of the aerodynamically functional film (14.3) is achieved after attachment and subsequent removal of the positioning film (11).

3. Apparatus according to one of the preceding claims,
wherein
the aerodynamically functional film (14.3) has openings and/or slots (13) in the form of cutouts for locations to be kept free on the surfaces (4) of the body (1) around which flow passes.

4. Use of an apparatus according to one of the preceding claims for attaching aerodynamically functional films (14.1-5) to surfaces (4) of bodies (1) around which flow passes, having the following steps:
a) applying the positioning film (11) of the apparatus, in the position predefined by the positioning aids (12), to the surface (4) of the body (1) around which flow passes, wherein, in the region of the at least one application area (13.3) on that side of the positioning film (11) that is provided with adhesive (11'), at least one self-adhesive, aerodynamically functional film (14.3) is provided in such a way that it is applied to the same surface (4) of the body (1) around which flow passes, in the application areas (13.1-5) of the positioning film (11), at the same time as the positioning film (11) such that there is a respective adhesive connection both between the positioning film (11) and the surface (4) except for the at least one application area (13.3) and between the at least one aerodynamically functional film (14.3) and the surface (4) in the region of the at least one application area (13.3); and
b) removing the positioning film (11).

5. Use according to Claim 4, wherein
the aerodynamically functional film (14.1-5) is a riblet film and/or the body around which flow passes is an aircraft (2) or an aircraft wing (1).

## Revendications

1. Dispositif pour l'application de films aérodynamiquement fonctionnels (14.1-5) sur des surfaces (4) de corps (1) entourés d'un écoulement, comprenant un film de positionnement (11) auto-adhésif détachable avec des auxiliaires de positionnement (12) pour le positionnement exact du film de positionnement (11) sur la surface (4) du corps (1) entouré d'un écoulement, et au moins une surface d'application (13.1-5) pour le film aérodynamiquement fonctionnel (14.1-5) à appliquer, où
dans la zone de l'au moins une surface d'application (13.3), sur le côté du film de positionnement (11) pourvu d'un adhésif (11'), au moins un film aérodynamiquement fonctionnel auto-adhésif (14.3) est prévu, lequel, lors de l'application du film de positionnement (11) sur la même surface (4) du corps (1) entouré d'un écoulement, adhère, de telle sorte qu'une liaison adhérente existe dans chaque cas tant entre le film de positionnement (11) et la surface (4) en dehors de l'au moins une surface d'application (13.3) qu'entre l'au moins un film aérodynamiquement fonctionnel (14.3) et la surface (4) dans la zone de l'au moins une surface d'application (13.3), et reste sur la surface (4) du corps (1) entouré d'un écoulement lors du retrait ultérieur du film de positionnement (11).

2. Dispositif selon la revendication 1, où
lorsqu'une orientation du film aérodynamiquement fonctionnel (14.3) sur la surface (4) du corps (1) entouré d'un écoulement est requise, le film aérodynamiquement fonctionnel (14.3) est disposé sur le film de positionnement (11) de telle sorte que le film aérodynamiquement fonctionnel (14.3) après l'application puis le retrait du film de positionnement (11), l'orientation souhaitée du film aérodynamiquement fonctionnel (14.3) est obtenue.

3. Dispositif selon l'une quelconque des revendications précédentes, où
le film aérodynamiquement fonctionnel (14.3) présente des évidements et/ou des fentes (13) en tant que découpes pour des emplacements devant rester libres sur la surface (4) du corps (1) entouré d'un écoulement.

4. Utilisation d'un dispositif selon l'une quelconque des revendications précédentes pour l'application de films aérodynamiquement fonctionnels (14.1-5) sur des surfaces (4) de corps (1) entourés d'un écoulement, avec les étapes suivantes :
a) l'application du film de positionnement (11) du dispositif, dans la position prédéfinie par les auxiliaires de positionnement (12), sur la surface (4) du corps (1) entouré d'un écoulement, au moins un film aérodynamiquement fonctionnel auto-adhésif (14.3) étant prévu dans la zone de l'au moins une surface d'application (13.3) sur le côté du film de positionnement (11) pourvu d'un adhésif (11'), de telle sorte que celui-ci est appliqué simultanément avec le film de positionnement (11) sur la même surface (4) du corps (1) entouré d'un écoulement dans les surfaces d'application (13.1-5) du film de positionnement (11), de telle sorte qu'il existe dans chaque cas une liaison adhérente tant entre le film de positionnement (11) et la surface (4) en dehors de l'au moins une surface d'application (13.3) qu'entre l'au moins un film aérodynamiquement fonctionnel (14.3) et la surface (4) dans la zone de l'au moins une surface d'application (13.3) ; et
b) le retrait du film de positionnement (11).

5. Utilisation selon la revendication 4, où
le film aérodynamiquement fonctionnel (14.1-5) est un film à riblets et/ou le corps entouré d'un écoulement est un aéronef (2) ou une aile d'aéronef (1).
